(19) Europäisches Patentamt
European Patent Office
Office européen des brevets

(11) Numéro de publication : **0 498 694 A1**

(12) # DEMANDE DE BREVET EUROPEEN

(21) Numéro de dépôt : **92400214.0**

(22) Date de dépôt : **28.01.92**

(51) Int. Cl.$^5$ : **A01N 33/18,** A01N 41/06, A01N 41/10

(30) Priorité : **29.01.91 FR 9100994**

(43) Date de publication de la demande : **12.08.92 Bulletin 92/33**

(84) Etats contractants désignés : **AT CH DE ES FR GR IT LI**

(71) Demandeur : **C F P I**
**28 Boulevard Camélinat, Boîte Postale 75**
**F-92233 Gennevilliers Cédex (FR)**

(72) Inventeur : **Arcuset, Paul**
**Chemin des Rocailles**
**F-30400 Villeneuve les Avignon (FR)**
Inventeur : **Pecheur, Jacques**
**95 ter, Rue des Colombes**
**F-92400 Courbevoie (FR)**
Inventeur : **Ambrosi, Dominique**
**3 Place Charras**
**F-92400 Courbevoie (FR)**
Inventeur : **Schapira, Joseph**
**32, Rue Miollis**
**F-75015 Paris (FR)**

(74) Mandataire : **Koch, Gustave**
**Cabinet PLASSERAUD 84, rue d'Amsterdam**
**F-75009 Paris (FR)**

(54) **Produit pour la limitation du nombre de rameaux dans le cas de la vigne et des autres végétaux ligneux et procédé pour sa mise en oeuvre.**

(57) Produit pour la limitation du nombre de rameaux dans le cas de la vigne et des autres végétaux ligneux, caractérisé par le fait qu'il comprend en combinaison une quantité efficace d'au moins un produit ou matière de contact en tant qu'agent curatif et une quantité efficace d'au moins une dinitro-aniline en tant qu'agent préventif.

EP 0 498 694 A1

L'invention a pour objet un produit pour la limitation du nombre de rameaux dans le cas de la vigne et des autres végétaux ligneux.

Par végétaux ligneux, on entend les arbres et arbustes ornementaux et fruitiers, notamment le pêcher, l'actinidia, le passiflore, le framboisier et le mûrier.

Elle vise également un procédé pour la mise en oeuvre du susdit produit.

La limitation du nombre de rameaux dans le cas de la vigne et des autres végétaux ligneux permet d'optimiser et régulariser la végétation de la plante traitée.

Pour arriver à la limitation dont il a été question ci-dessus, il convient d'éliminer certains rameaux, appelés pampres dans le cas de la vigne.

Il est connu de parvenir à la susdite limitation en procédant manuellement à la suppression des rameaux en surnombre.

La difficulté réside toujours dans la suppression des bourgeons dits "dormants" situés à la base desdits rameaux, bourgeons qui ne sont pas systématiquement supprimés en même temps que le rameau concerné.

Dans le cas de la vigne, ce problème est particulièrement important.

A cet égard, un pied de vigne ou cep comprend un tronc dont la hauteur est variable suivant le mode de taille; de ce tronc partent les bras sur lesquels poussent, à leur tour, des ramifications appelées coursons; les coursons constituent les parties productives de la vigne. En effet, sur chacun des coursons se développent un ou deux pampres ou sarments productifs. L'espace situé entre deux coursons ou espace inter-coursons est constitué par une zone non productive appelée vieux bois.

Des rameaux ou sarments ou encore pampres indésirables se développent sur le tronc et le vieux bois des bras; on les élimine par une opération manuelle ou chimique dénommée "épamprage", opération à l'issue de laquelle on ne conserve que les sarments qui sont issus des coursons et qui ont principalement pour origine des sarments ayant végété l'année précédente.

L'épamprage est réalisé avant la floraison de la vigne lorsque les jeunes sarments sont encore herbacés et, de ce fait, très cassants.

Plus précisément et étant donné que la "sortie" des pampres, autrement dit le débourrement de la vigne, se produit au début du printemps, l'épamprage est réalisé traditionnellement un mois et demi à trois mois plus tard, c'est-à-dire juste avant la floraison.

Cette opération a pour but de tendre vers une production régulière et surtout une maturation homogène en unifiant la période de floraison et, de ce fait, la période de maturation.

Actuellement la technique de l'épamprage est réalisée, comme déjà indiqué plus haut, soit manuellement sur les bras, soit manuellement ou chimiquement sur les troncs à l'aide de produits ou matières dits "de contact"; au moment où est réalisé l'épamprage, c'est-à-dire avant la floraison, le jeune pampre est très facile à enlever manuellement, de même qu'il est très sensible au produit de contact qui le "grille" par dessèchement de la partie herbacée.

Lorsque l'épamprage est réalisé trop tôt soit manuellement sur les bras, soit manuellement ou chimiquement sur les troncs à l'aide de produits ou matières dits "de contact", il ne permet pas d'empêcher, après l'enlèvement des pampres indésirables, l'apparition de nouvelles pousses ou nouveaux sarments qui ont alors pour origine les bourgeons ou "yeux dormants" situés à la base des sarments.

L'invention a pour but, surtout, de remédier aux inconvénients de l'art antérieur; dans le cas plus particulièrement de la vigne ainsi que dans le cas des autres végétaux ligneux, elle a pour but de fournir des moyens permettant non seulement d'éliminer les pampres très jeunes mais encore d'empêcher l'apparition d'autres rameaux ou pampres à partir des "yeux dormants".

Autrement dit, l'invention a pour but de mettre à la disposition de l'utilisateur des moyens qui soient non seulement curatifs mais également préventifs.

Or, il est du mérite de la Société Demanderesse d'avoir trouvé, à l'issue de recherches approfondies, que ce but était atteint grâce au produit pour la limitation du nombre de rameaux ou sarments conforme à l'invention qui est caractérisé en ce qu'il comprend en combinaison une quantité efficace d'au moins un produit de contact en tant qu'agent curatif et une quantité efficace d'au moins une dinitro-aniline en tant qu'agent préventif.

On désigne par l'expression produit ou matière de contact tout produit qui détruit par dessèchement les jeunes rameaux herbacés; ces produits ou matières de contact n'agissent pas sur les "yeux dormants" situés à la base des rameaux ou pampres indésirables situés sur le vieux bois, c'est-à-dire le tronc et les bras.

Les dinitro-anilines, quant à elles, produisent un effet inhibiteur au niveau du bourgeon situé à la base du rameau ou pampre dans le cas de la vigne sur vieux bois. Il s'agit là d'un blocage de la végétation à venir.

Les matières de contact mises en oeuvre dans le produit conforme à l'invention sont choisies dans le groupe comprenant

– les alcools gras saturés en $C_6$ à $C_{18}$,

– les esters alcooliques d'alcool gras,

– les sels d'amines grasses,
– les sels de bipyridynium tels que le paraquat et le diquat,
– le glufosinate.

Les dinitro-anilines mises en oeuvre dans le susdit produit conforme à l'invention présentent la formule générale suivante:

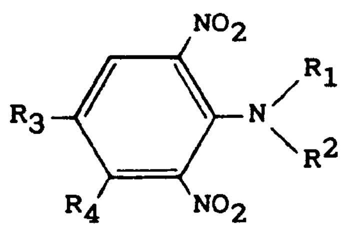

dans laquelle:

– $R_1$ représente un atome d'hydrogène, un radical alkyle inférieur en $C_1$ à $C_8$, éventuellement substitué ou un radical alcényle inférieur en $C_2$ à $C_4$;
– $R_2$ représente un radical alcényle inférieur en $C_2$ à $C_4$, un radical cycloalkyle en $C_3$ à $C_6$, un radical alkyle inférieur en $C_1$ à $C_8$ ou éventuellement substitué, ou encore un radical benzyle éventuellement substitué;
– $R_3$ représente un atome d'hydrogène, un atome d'halogène, un radical alkyle ou alcoxy inférieur en $C_1$ à $C_4$, ou un radical trifluorométhyle, cyano, $-SO_2NR_5R_6$ ou $-SO_2R_7$;
– $R_4$ représente un atome d'hydrogène, un atome d'halogène, un radical amino, un radical mono- et di-- (alkyle inférieur en $C_1$ à $C_6$) amino, alcoxyalcoxy en $C_2$ à $C_6$, alcoxy inférieur en $C_1$ à $C_4$, alkylthio inférieur en $C_1$ à $C_4$ ou alkyle inférieur en $C_1$ à $C_4$;
– $R_5$ et $R_6$ représentent chacun un atome d'hydrogène ou un radical alkyle inférieur en $C_1$ à $C_4$ et
– $R_7$ représente un radical alkyle inférieur en $C_1$ à $C_4$.

On désigne par "alkyle inférieur substitué" des radicaux alkyle comportant de 1 à 8 atomes de carbone et substitués par un substituant choisi dans le groupe comprenant les atomes d'halogène, les radicaux alcoxy en $C_1$-$C_2$, les radicaux amino, nitro, cyano, cycloalkyle en $C_3$-$C_6$ et alkylthio inférieur en $C_1$-$C_7$.

On préfère les composés dans lesquels $R_1$ et $R_2$ comportent au total 3 à 6 atomes de carbone ou un radical benzyle.

Des exemples illustratifs de radicaux alkyle inférieurs sont les radicaux méthyle, éthyle, propyle, isopropyle, butyle, isobutyle, sec-butyle, éthyl-1-propyle, méthyl-1-butyle, éthyl-1-butyle, heptyle, octyle et similaires.

Des exemples illustratifs de radicaux alcényle inférieurs sont les radicaux vinyle, allyle, propène-1-yle, isopropényle, butène-1-yle, butène-3-yle et similaires.

Des exemples illustratifs de radicaux cycloalkyle sont les radicaux cyclopropyle, cyclobutyle, cyclopentyle et cyclohexyle.

Des exemples illustratifs d'atomes d'halogène sont les atomes fluor, chlore, brome et iode. On préfère le chlore.

Les dinitro-anilines mises en oeuvre conformément à l'invention sont choisies, de préférence, dans le groupe comprenant:

– la N,N-dipropyltrifluorométhyl-4-dinitro-2,6-aniline,
– la N-éthyl-N-butyl-trifluorométhyl-4-dinitro-2,6-aniline,
– la dinitro-2,6-trifluorométhyl-4-N-propyl-N-(cyclopropylméthyl)aniline,
– la tert-butyl-4-dinitro-2,6-N-sec-butylaniline,
– la diméthyl-3,4-dinitro-2,6-N-(éthyl-1-propyl)aniline,
– la N,N-diéthyl-trifluorométhyl-4-dinitro-2,6-aniline,
– la N,N-dipropyl-méthylsulfonyl-4-dinitro-2,6-aniline,
– la N,N-dipropyl-isopropyl-4-dinitro-2,6-aniline,
– la N,N-dipropyl-aminosulfonyl-4-dinitro-2,6-anline,
– la N-(chloro-2-éthyl)-N-propyl-trifluorométhyl-4-dinitro-2,6-aniline,
– la N-(méthyl-2-propényl-2)-N-éthyl-trifluorométhyl-4-dinitro-2,6-aniline,
– la N,N-dipropyl-amino-3-trifluorométhyl-4-dinitro-2,6-aniline,
– la N-(chloro-2-fluoro-6-benzyl)-N-éthyl-trifluorométhyl-4-dinitro-2,6-aniline.

On utilise de préférence, dans les produits de limitation du nombre de rameaux, ou d'épamprage dans le cas de la vigne, des adjuvants classiquement utilisés en arboriculture et viticulture.

Les susdits produits peuvent être présentés sous la forme de:

– poudres mouillables,
– granulés délitables,
– suspensions concentrées,
– concentrés émulsionnables,
– émulsions aqueuses,
de même que sous la forme de:
– poudres solubles,
– solutions vraies,
– émulslons de type huileux,
ou en combinaison de ces formes.

Lorsque le produit conforme à l'invention se présente sous l'une quelconque des formes liquides ci-dessus, Il comprend, outre au moins une dinitro-aniline, un ou plusieurs agents de surface de type ionique ou non ionique ainsi qu'un diluant ou charge, ou un vecteur.

Lorsque le produit conforme à l'invention se présente sous l'une quelconque des formes solides ci-dessus, il comprend, outre au moins une dinitro-aniline, un ou plusieurs diluants ou charges solides ainsi qu'un ou plusieurs agents de surface.

Les agents de surface peuvent être choisis parmi les agents de surface non ioniques et anioniques cités dans la publication annuelle (North American Edition et International Edition) éditée par McCutcheon's Division MC Publishing Company et relative aux "Emulsifiers & Detergents" ou dans l'index des surfactants publié par B. Parant chez D.T.A. (France).

Les agents de surface non ioniques utilisables sont ceux provenant de la condensation d'une ou plusieurs moles d'oxyde d'éthylène et/ou de propylène avec des alcools courts ou gras, des alcoylphénols, des amines grasses, des amides gras, des polystyrylphénols.

Les agents de surface anioniques comprennent les alcoylarylsulfonates sous forme de sels de métaux alcalins, alcalino-terreux ou d'alcanolamines, les savons, les esters phosphoniques de produits du type non ionique cités précédemment, les polynaphtylméthane-polysulfonates et leurs dérivés alcoylés, les lignosulfonates et les polymères présentant plusieurs fonctions carboxyliques.

Le diluant est choisi dans le groupe comprenant l'eau, l'acétophénone, la cyclohexanone, l'isophorone, le toluène, le xylène, le diméthyl-sulfoxyde (ou DMSO) et les huiles minérales, animales ou végétales; on souligne que, dans la mesure où ils sont liquides, les agents de surface, anioniques ou non ioniques, peuvent également servir de diluants ou de vecteurs.

Les diluants ou charges solides sont choisis dans le groupe comprenant la silice, le talc, les argiles comme le kaolin et la bentonite.

Outre le diluant ou charge, le produit conforme à l'invention, lorsqu'il se présente à l'état solide, peut comprendre des agents mouillants ou dispersants qui, dans l'éventualité où ils sont solides, peuvent également servir de diluants ou de charges.

Le produit conforme l'invention, lorsqu'il se présente à l'état de poudre, peut être obtenu par broyage d'au moins une dinitro-aniline avec une charge solide ou par imprégnation de cette charge avec la ou les dinitroanilines ou une solution de cette ou ces dinitro-anilines dans un solvant volatil qui est subséquemment éliminé par évaporation, le produit restant étant broyé pour fournir une poudre.

Pour préparer un produit conforme à l'invention se présentant sous forme granulée, on peut absorber la ou les dinitro-anilines telle(s) quelle(s) ou après dissolution dans un solvant volatil sur une charge pulvérulente ou une charge solide sous forme déjà granulée, le solvant étant ensuite éliminé par évaporation.

Le produit conforme à l'invention peut comprendre, de plus, des adjuvants tels que des agents adhésifs, des agents protecteurs, des agents délitants, des agents pénétrants, des agents stabilisants, des agents réducteurs de volatilité, des séquestrants, des antimottants, des colorants, et des inhibiteurs de corrosion; il est à noter que, dans certains cas, ces adjuvants peuvent également servir de diluants ou de vecteurs.

Pour préparer le produit conforme à l'invention à partir d'un concentré liquide ou solide, on peut avoir recours aux diluants identifiés ci-dessus.

Il est intéressant de disposer d'un concentré se présentant sous forme auto-émulsionnable contenant au moins une dinitro-aniline dissoute dans un agent émulsifiant ou dans un solvant; en préparant à partir d'un tel concentré le produit anti-bourgeons par addition d'eau, on obtient un produit liquide conforme à l'invention prêt à l'emploi.

Il est indiqué que les concentrés liquides dans lesquels le diluant ou la charge est constitué par une huile, peuvent être utilisés sans dilution par toute technique appropriée comme la pulvérisation à bas ou très bas volume ou la pulvérisation électrostatique.

Enfin, l'utilisation de bouillies prêtes à l'emploi contenant le ou les constituants actifs à la concentration nécessaire à l'obtention de résultats biologiques fait également partie de l'invention.

Avantageusement, le produit conforme à l'invention peut être présenté sous la forme d'un kit caractérisé par le fait qu'il comprend:

– un premier ensemble comprenant au moins une dinitro-anillne,
– un deuxième ensemble comprenant au moins une matière de contact,

ces deux ensembles étant logés dans des récipients différents.

Le produit conforme à l'invention comprend, au sein d'un des véhicules d'application bien connus de l'homme de l'art:

– en ce qui concerne la matière active de contact, de 50 à 3000 g par hectolitre,
– en ce qui concerne la dinitro-aniline, de 100 à 2000 g par hectolitre et, de préférence, de 200 à 1000 g par hectolitre.

Le procédé de limitation du nombre de rameaux, ou de pampres dans le cas de la vigne, est caractérisé en ce qu'on applique sur le végétal ligneux, plus particulièrement sur la vigne avant la floraison, le produit conforme à l'invention à raison, dans le cas de la vigne, de 20 à 500 ml par cep, de préférence, de 25 à 150 ml par cep et, plus préférentiellement encore, de 30 à 70 ml par cep.

Un avantage particulier, dans le cas du traitement de la vigne, de l'application du susdit produit sur vieux bois réside dans le fait qu'il devient possible de réaliser l'épamprage à un stade végétatif de la vigne plus précoce que celui auquel est effectué l'épamprage manuel ou chimique par produit de contact uniquement curatif. En effet, cette technique unoquement curative, pour être pleinement efficace, doit être réalisée juste avant la floraison et le plus tard possible pour éliminer tous les pampres qui ont eu le temps de pousser et pour ne pas laisser le temps aux "yeux dormants" de produire d'autres pampres.

L'épamprage conforme à l'invention peut être effectué dès un stade végétatif auquel les pampres sont tout juste visibles sur vieux bois (tronc et bras) jusqu'au stade "jeunes pampres" à une ou trois ou quatre feuilles étalées. La visualisation des pampres est alors suffisante pour y appliquer le produit d'épamprage selon l'invention, lequel agit à la fois au niveau des pampres présents qui sont détruits, ainsi qu'au niveau des bourgeons dormants qui sont inhibés.

L'épamprage précoce ainsi réalisé permet de libérer le viticulteur des contraintes de l'art antérieur et de simplifier ou limiter les opérations de taille en hiver du fait du nombre moindre de sarments indésirables à éliminer; il permet, de plus, éventuellement, de limiter la transmission de certaines maladies par les plaies de taille, celles-ci étant en nombre moindre.

On peut réaliser l'application sur le terrain du produit conforme à l'invention selon des techniques classiques utilisant, par exemple, des pulvérisateurs à pompe à main, à moteur ou à pression préalable, équipés de rampes ou de lances servant à l'application, bien connus de l'homme de l'art. Pour les applications localisées, on peut utiliser par exemple des pinceaux alimentés par gravité ou par pression, ou tout autre système tel que les gants ou les éponges enduits de produit concentré ou dilué.

Un avantage inattendu de l'invention telle que décrite ci-dessus réside dans le fait qu'il y a une rémanence de l'effet du produit conforme à l'invention, appliqué sur le végétal ligneux et plus particulièrement sur la vigne dès lors que ce produit a été appliqué au moins un an auparavant.

A cet égard, la Société Demanderesse a notamment constaté que, dans le cas de la vigne et après deux ans de traitement, celle-ci présente un nombre de pampres ou sarments indésirables plus faible qu'une vigne n'ayant subi aucun traitement pendant cette même période.

Les exemples qui suivent permettront de mieux comprendre l'invention; ils ne sont pas limitatifs et ne sont donnés qu'à titre illustratif en rapport avec des modes de réalisation avantageux.

EXEMPLE 1

Deux essais ont été réalisés sur deux cépages différents: le Muscat et le Cinsaut.

Pour chacun des essais, on a appliqué sur les troncs des ceps de vignes au stade deux feuilles étalées, au moyen de lances équipées de buses de pulvérisation et sur les bras desdits ceps au moyen de pinceaux, d'une part une dinitro-aniline seule, et d'autre part la combinaison conforme à l'invention d'une dinitro-aniline et d'une matière active de contact.

Puis, plus tard, au moment de la floraison, période où se situe normalement l'épamprage classique (ou juste avant cette période), on a compté le nombre de pampres subsistant après traitement et on a calculé le pourcentage de ces pampres par rapport à un témoin non traité pour lequel le nombre de pampres est considéré comme étant de 100%.

Les dinitro-anilines utilisées sont:

– la tert-butyl-4-dinitro-2,6-N-sec-butylaniline connue sous le nom de butraline,
– la N-(chloro-2-fluoro-6-benzyl)-N-éthyl-trifluorométhyl-4-dinitro-2,6-aniline connue sous le nom de flumétraline,

– la diméthyl-3,4-dinitro-2,6-N-(éthyl-1-propyl)aniline connue sous le nom de pendométhaline.

La matière active de contact utilisée en combinaison avec la butraline, la flumétraline ou la pendiméthaline est un mélange d'alcools gras majoritairement en $C_8$ à $C_{10}$ connu sous la désignation CA 846.

Dans le tableau I, on a récapitulé les résultats de ces essais.

TABLEAU I

| Matière active (m.a.) | Doses m.a. en g/hl | ESSAI SUR MUSCAT – Pourcentage des pampres restant par cep – Troncs | Bras | ESSAI SUR CINSAUT – Troncs | Bras |
|---|---|---|---|---|---|
| Butraline | 1080 | 50 | 27 | 36 | 46 |
| CA 846 | 2700 | 57 | 31 | 112 | 63 |
| Butraline + CA 846 | 450 + 2700 | 32 | 17 | 24 | 42 |
| Flumétraline | 540 | 65 | 35 | 34 | 44 |
| Flumétraline + CA 846 | 225 + 2700 | 59 | 33 | 33 | 42 |
| Pendiméthaline | 540 | 82 | 44 | 57 | 43 |
| Pendiméthaline + CA 846 | 413 + 2700 | 45 | 34 | 38 | 48 |
| Témoin | 0 | 100 | 100 | 100 | 100 |

Les résultats réunis dans le tableau I montrent qu'aux doses utilisées lors des deux essais, par rapport à l'application sur la vigne soit d'une matière de contact seule, à savoir le mélange d'alcools gras CA 846, soit d'une dinitro-aniline seule, à savoir la butraline, la flumétraline ou la pendiméthaline, le résultat obtenu avec la composition conforme à l'invention est en général nettement renforcé.

Dans certains cas, les résultats obtenus sur les bras sont meilleurs que ceux obtenus sur les troncs; ceci pourrait être en corrélation directe --la Société Demanderesse n'entendant toutefois pas être liée par cette supposition-- avec les modes d'application du produit d'épamprage.

EXEMPLE 2

Un essai a été réalisé sur différentes parcelles d'un même cépage, à savoir le Muscat à Beaumes de Venise.

On a traité la vigne au stade deux feuilles étalées selon deux techniques différentes:

– au pinceau pour les bras,

– à la lance équipée d'une buse de pulvérisation à cône plein pour les troncs.

Le traitement a consisté en l'application, tant sur bras que sur troncs, d'une part d'une matière de contact seule qui est un sel de bipyridynium appelé paraquat et, d'autre part, d'un produit conforme à l'invention constitué par la combinaison du paraquat et de la butraline.

Le traitement a été appliqué sur six parcelles de vignes, numérotées de I à VI, chaque parcelle comportant 24 ceps. Un témoin sur chacune des parcelles a permis de noter également les résultats obtenus à la suite d'un épamprage manuel juste avant floraison.

Un comptage des pampres est effectué sur chaque parcelle au mois de juin au moment de l'épamprage manuel; on a retenu comme chiffre indicatif la moyenne du nombre de pampres restant par cep pour chaque parcelle.

Dans le tableau II, on a réuni les résultats de cet essai.

## TABLEAU II

| Produit | Doses en g/hl | | Moyenne du nombre de pampres restant à l'issue de l'essai | | | | | | | |
|---|---|---|---|---|---|---|---|---|---|---|
| | | | I | II | III | IV | V | VI | Moyenne | % du témoin |
| Paraquat | 200 | bras | 6,9 | 0,5 | 11,6 | 6,9 | 14,0 | 8,8 | 8,1 | 29 |
| | | tronc | 5,0 | 3,7 | 5,5 | 2,5 | 5,2 | 2,8 | 4,1 | 39 |
| Butraline + Paraquat | 1440 + 200 | bras | 3,1 | 6,1 | 6,7 | 8,0 | 7,2 | 5,8 | 6,1 | 22 |
| | | tronc | 2,5 | 3,6 | 2,7 | 3,9 | 2,1 | 1,4 | 2,7 | 25 |
| Traitement manuel | 0 | bras | 21,1 | 26,1 | 31,6 | 31,9 | 28,8 | 28,1 | 27,9 | 100 |
| | | tronc | 12,3 | 9,3 | 12,9 | 11,6 | 7,0 | 10,1 | 10,6 | 100 |

Le traitement de la vigne par le seul paraquat permet d'éliminer un nombre de pampres plus grand que l'épamprage manuel ne le permet et le résultat obtenu est sensiblement meilleur au niveau des bras.

Toutefois, le traitement de la vigne par le produit d'épamprage conforme à l'invention comprenant en combinaison de la butraline et du paraquat, donne des résultats encore nettement améliorés.

De plus, l'effet dudit produit d'épamprage est relativement homogène sur les bras et sur les troncs.

## EXEMPLE 3

Cet exemple illustre l'effet rémanent de différents produits d'épamprage après deux années de traitement.

On a traité pendant deux années successives ("première" et "deuxième" année) trois parcelles d'une vigne Muscat, numérotées respectivement I, II et III:

– sur les bras au moyen d'un pinceau

– sur les troncs au moyen d'une lance équipée d'une buse de pulvérisation à cône plein,

en appliquant:

– sur la première parcelle (I), de la butraline associée à un mélange d'alcools gras majoritairement en $C_8$ à $C_{10}$, à raison de 450 g/hl de butraline et de 2700 g/hl d'alcools gras,

– sur la deuxième parcelle (II), de la butraline associée au paraquat à raison de 1440 g/hl de butraline et de 200 g/hl de paraquat,

– sur la troisième parcelle (III), du paraquat seul à raison de 200 g/hl.

Une quatrième parcelle (IV) non traitée constitue le témoin; les ceps de cette parcelle sont soumis à un épamprage manuel classique pendant la première et la deuxième année.

La troisième année, on a compté, juste avant la période d'application normale des produits, cette période étant désignée par l'expression "mise en place", le pourcentage de pampres indésirables restants suite aux traitements des deux années précédentes.

Dans le cas du témoin, ce pourcentage est de 100%.

Dans le cas des trois parcelles traitées, les pourcentages de pampres indésirables sont réunis dans le tableau III.

TABLEAU III

| | Pourcentages de pampres restants avant "mise en place" | |
|---|---|---|
| Parcelle | Troncs | Bras |
| I | 78 | 57 |
| II | 67 | 45 |
| III | 92 | 95 |
| IV | 100 | 100 |

Des chiffres réunis dans le tableau III, il résulte que deux années de traitement au moyen du produit conforme à l'invention (parcelles I et II) se traduisent la troisième année par la présence d'un nombre réduit de pampres indésirables, ce qui démontre la présence d'un effet rémanent qui n'est pas constaté pour le paraquat seul (parcelle III).

**Revendications**

1. Produit pour la limitation du nombre de rameaux dans le cas de la vigne et des autres végétaux ligneux, caractérisé par le fait qu'il comprend en combinaison une quantité efficace d'au moins un produit ou matière de contact en tant qu'agent curatif et une quantité efficace d'au moins une dinitro-aniline en tant qu'agent préventif.

2. Produit selon la revendication 1, caractérisé
par le fait que la matière de contact est choisie dans le groupe comprenant
   - les alcools gras saturés en $C_6$ à $C_{18}$,
   - les esters alcooliques d'alcool gras,
   - les sels d'amines grasses,
   - les sels de bipyridynium tels que le paraquat et le diquat,
   - le glufosinate.

3. Produit selon la revendication 1, caractérisé
par le fait que la dinitro-aniline présente la formule générale:

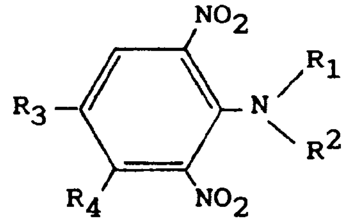

dans laquelle:
   - $R_1$ représente un atome d'hydrogène, un radical alkyle inférieur en $C_1$ à $C_8$, éventuellement substitué ou un radical alcényle inférieur en $C_2$ à $C_4$;
   - $R_2$ représente un radical alcényle inférieur en $C_2$ à $C_4$, un radical cycloalkyle en $C_3$ à $C_6$, un radical alkyle inférieur en $C_1$ à $C_8$ ou éventuellement substitué, ou encore un radical benzyle éventuellement substitué;
   - $R_3$ représente un atome d'hydrogène, un atome d'halogène, un radical alkyle ou alcoxy inférieur en $C_1$ à $C_4$, ou un radical trifluorométhyle, cyano, $-SO_2NR_5R_6$ ou $-SO_2R_7$;

– $R_4$ représente un atome d'hydrogène, un atome d'halogène, un radical amino, un radical mono- et di-(alkyle inférieur en $C_1$ à $C_6$) amino, alcoxyalcoxy en $C_2$ à $C_6$, alcoxy inférieur en $C_1$ à $C_4$, alkylthio inférieur en $C_1$ à $C_4$ ou alkyle inférieur en $C_1$ à $C_4$;
– $R_5$ et $R_6$ représentent chacun un atome d'hydrogène ou un radical alkyle inférieur en $C_1$ à $C_4$ et
– $R_7$ représente un radical alkyle inférieur en $C_1$ à $C_4$.

**4.** Produit selon la revendication 3, caractérisé par le fait que, lorsque le substituant $R_1$ ou $R_2$ est un radical alkyle inférieur substitué, il présente de 1 à 8 atomes de carbone, le substituant étant choisi dans le groupe comprenant les atomes d'halogène, les radicaux alcoxy en $C_1$-$C_2$, les radicaux amino, nitro, cyano, cycloalkyle en $C_3$-$C_6$ et alkylthio inférieur en $C_1$-$C_7$.

**5.** Produit selon la revendication 3, caractérisé par le fait que la dinitro-aniline est choisie dans le groupe comprenant:
– la N,N-dipropyltrifluorométhyl-4-dinitro-2,6-aniline,
– la N-éthyl-N-butyl-trifluorométhyl-4-dinitro-2,6-aniline,
– la dinitro-2,6-trifluorométhyl-4-N-propyl-N-(cyclopropylméthyl)aniline,
– la tert-butyl-4-dinitro-2,6-N-sec-butylaniline,
– la diméthyl-3,4-dinitro-2,6-N-(éthyl-1-propyl)aniline,
– la N,N-diéthyl-trifluorométhyl-4-dinitro-2,6-aniline,
– la N,N-dipropyl-méthylsulfonyl-4-dinitro-2,6-aniline,
– la N,N-dipropyl-isopropyl-4-dinitro-2,6-aniline,
– la N,N-dipropyl-aminosulfonyl-4-dinitro-2,6-aniline,
– la N-(chloro-2-éthyl)-N-propyl-trifluorométhyl-4-dinitro-2,6-aniline,
– la N-(méthyl-2-propényl-2)-N-éthyl-trifluorométhyl-4-dinitro-2,6-aniline,
– la N,N-dipropyl-amino-3-trifluorométhyl-4-dinitro-2,6-aniline,
– la N-(chloro-2-fluoro-6-benzyl)-N-éthyl-trifluorométhyl-4-dinitro-2,6-aniline.

**6.** Produit selon l'une des revendications 1 à 5, caractérisé par le fait qu'il comprend, au sein d'un véhicule d'application:
– en ce qui concerne la matière active de contact, de 50 à 3000 g par hectolitre,
– en ce qui concerne la dinitro-aniline, de 100 à 2000 g par hectolitre et, de préférence, de 200 à 1000 g par hectolitre.

**7.** Procédé de limitation du nombre de rameaux dans le cas de la vigne et des autres végétaux ligneux, caractérisé par le fait que l'on applique sur le végétal ligneux, plus particulièrement sur la vigne avant la floraison, le produit selon la revendication 6 à raison, dans le cas de la vigne, de 20 à 500 ml par cep, de préférence, de 25 à 150 ml par cep et, plus préférentiellement encore, de 30 à 70 ml par cep.

**8.** Kit caractérisé par le fait qu'il comprend:
– un premier ensemble comprenant au moins une dinitroaniline,
– un deuxième ensemble comprenant au moins une matière de contact,
ces deux ensembles étant logés dans des récipients différents.

Office européen des brevets

# RAPPORT DE RECHERCHE EUROPEENNE

Numero de la demande

EP 92 40 0214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-3 880 643 (A.R. COOKE ET. AL.)<br>* colonne 1, ligne 9 - ligne 31 *<br>----- | 1-8 | A01N33/18<br>A01N41/06<br>A01N41/10 |
| | | | **DOMAINES TECHNIQUES RECHERCHES (Int. Cl.5 )** |
| | | | A01N |

Le présent rapport a été établi pour toutes les revendications

| Lieu de la recherche | Date d'achèvement de la recherche | Examinateur |
|---|---|---|
| LA HAYE | 01 JANVIER 1980 | DECORTE D.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)